**Europäisches Patentamt**

**European Patent Office**

**Office européen des brevets**

(19)

(11) Veröffentlichungsnummer : **0 181 325**
**B1**

(12) # EUROPÄISCHE PATENTSCHRIFT

(45) Veröffentlichungstag der Patentschrift :
**29.07.87**

(51) Int. Cl.⁴ : **B 62 D 5/08**

(21) Anmeldenummer : **84901768.6**

(22) Anmeldetag : **04.05.84**

(86) Internationale Anmeldenummer :
**PCT/EP 84/00133**

(87) Internationale Veröffentlichungsnummer :
**WO/8500565 (14.02.85 Gazette 85/04)**

(54) DRUCKMITTELSTEUEREINRICHTUNG FÜR HILFSKRAFTLENKUNGEN.

(30) Priorität : **23.07.83 PCT/EP83/00196**

(43) Veröffentlichungstag der Anmeldung :
**21.05.86 Patentblatt 86/21**

(45) Bekanntmachung des Hinweises auf die Patenterteilung : **29.07.87 Patentblatt 87/31**

(84) Benannte Vertragsstaaten :
**DE FR GB SE**

(56) Entgegenhaltungen :
**FR-A- 2 295 276**
**GB-A- 1 154 851**

(73) Patentinhaber : **ZAHNRADFABRIK FRIEDRICHSHA-FEN AKTIENGESELLSCHAFT**
**Löwentaler Strasse 100 Postfach 2520**
**D-7990 Friedrichshafen 1 (DE)**

(72) Erfinder : **LANG, Armin**
**Rheinstr. 10**
**D-7070 Schwäbisch Gmünd (DE)**
Erfinder : **KNÖDLER, Helmut**
**Eisternweg 6**
**D-7073 Lorch (DE)**

(74) Vertreter : **Raue, Reimund**
**Zahnradfabrik Friedrichshafen AG Löwentaler Strasse 100 Postfach 2520**
**D-7990 Friedrichshafen 1 (DE)**

EP 0 181 325 B1

## Beschreibung

Die Erfindung bezieht sich auf eine Druckmittelsteuereinrichtung für Hilfskraftlenkungen, insbesondere für Kraftfahrzeuge, nach dem Oberbegriff des Patentanspruches 1.

Eine derartige Druckmittelsteuereinrichtung ist bekannt aus der DE-C-12 38 789. In dieser Steuereinrichtung werden die beiden Verschlußdeckel der Rückwirkungsräume durch eine massive Haltebrücke in Anlage an dem Ventilkörper gehalten. Die Haltebrücke ist durch eine Schraube an dem Ventilkörper befestigt, die mit einem Sicherungsblech gesichert ist. Diese Anordnung ist aufwendig und birgt bei ungenügender Sicherung der Halteschraube die Gefahr des Lösens derselben und damit des Blockierens der Lenkung in sich.

Der Erfindung liegt die Aufgabe zugrunde, die Verschlußdeckel der Ventilbohrungen durch einfache Mittel zuverlässig zu halten.

Diese Aufgabe wird durch die im kennzeichnenden Teil des Anspruches 1 angegebenen Merkmale gelöst. Vorteilhafte und zweckmäßige Ausgestaltungen sind in den Unteransprüchen angegeben.

Die Spange ist ein einfach herzustellendes Teil, das sich durch den in der Bohrung des Ventilkörpers festgelegten Bolzen auf einfache und sichere Weise in Anlage an den Verschlußdeckeln halten läßt. Durch die runde Kröpfung in ihrem Mittelteil ist die Spange in ihrer Längsrichtung festgelegt. Zur Festlegung der Spange in ihrer Querrichtung dient die Ringnut des Bolzens. Auf diese Weise ist zuverlässig ein selbständiges Lösen sowohl des Bolzens als auch der Federspange unmöglich. Trotz dieser zuverlässigen Sicherung ist eine Demontage leicht möglich, indem die Federspange mit Hilfe einer entsprechenden Vorrichtung von dem Bolzen weggedrückt und dieser danach axial herausgeschoben wird.

Die in der Zeichnung dargestellten Einzelheiten sind Gegenstand der Erfindung.

Im folgenden wird die Erfindung anhand eines in der Zeichnung dargestellten Ausführungsbeispieles näher erläutert. Es zeigt :

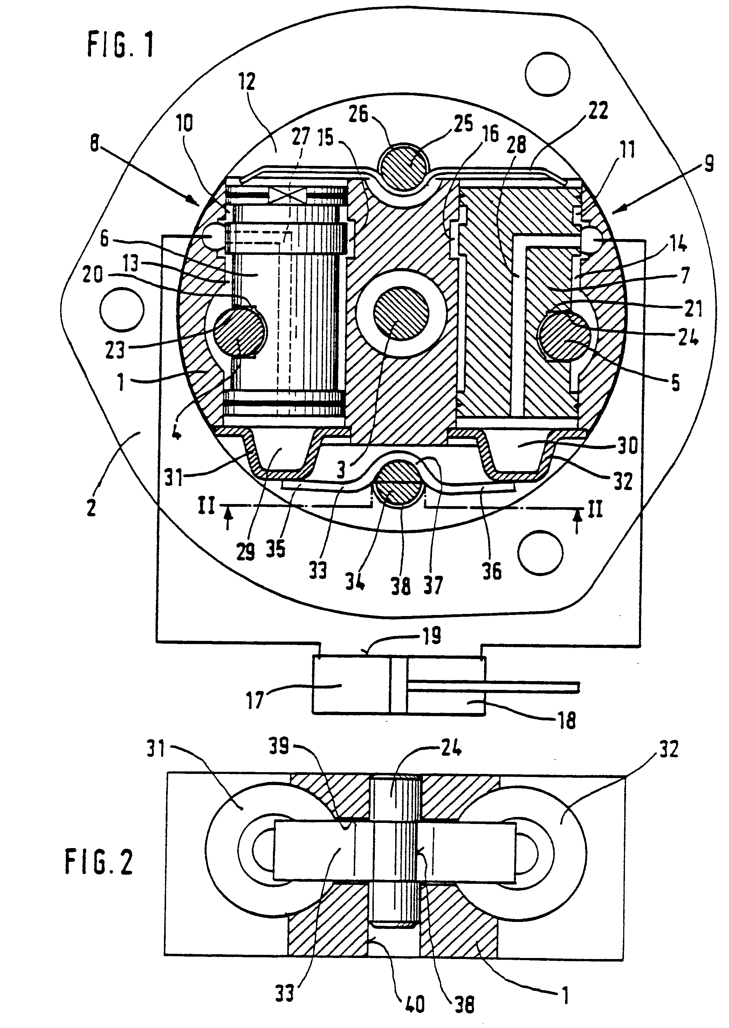

Figur 1   einen Querschnitt durch die Druckmittelsteuereinrichtung,

Figur 2   den Querschnitt entlang der Linie II-II nach Fig. 1.

Ein an einem Ende einer nicht dargestellten Lenkschnecke angeordneter Ventilkörper 1 ist drehbar in einem Lenkgehäuse 2 gelagert. Die Lenkschnecke ist durch einen Torsionsstab 3 verdrehweich mit einer nicht dargestellten Lenkspindel verbunden. Das gabelförmige Ende der Lenkspindel trägt zwei Mitnehmerzapfen 4 und 5, die zum Verstellen zweier Ventilkolben 6 und 7 von zwei quer und außermittig zur Längsachse der Druckmittelsteuereinrichtung angeordneten Steuerventilen 8 und 9 dienen.

Jedes der beiden Steuerventile 8 und 9 weist eine Zulaufringnut 10 bzw. 11 auf, die mit einer Zulaufkammer 12 der Steuer einrichtung in Verbindung steht. Ebenso weist jedes Steuerventil 8 und 9 eine Rücklaufringnut 13 bzw. 14 und je eine Zylinderringnut 15 bzw. 16 auf, die mit einem nicht dargestellten Druckmittelbehälter bzw. mit je einem der beiden Druckräume 17 und 18 eines Servomotors 19 in Verbindung stehen.

Die beiden Ventilkolben 6 und 7 weisen quer zu ihrer Längsrichtung angeordnete Quernuten 20 und 21 auf, in die die beiden Mitnehmerzapfen 4 und 5 mit Spiel eingreifen. Die Ventilkolben 6 und 7 werden durch eine Federspange 22 in Anlage in Berührungslinien 23 und 24 an den Mitnehmerzapfen 4 und 5 gehalten. Die Federspange 22 wird durch einen Bolzen 25 gehalten, der seinerseits durch eine Ausdrehung 26 von der Federspange 22 in axialer Richtung gehalten wird. Der Bolzen 25 ist in eine einfache Bohrung in dem Ventilkörper 1 gesteckt.

In den Ventilkolben 6 und 7 angeordnete Kanäle 27 und 28 stehen in Verbindung mit den Zylindernuten 15 bzw. 16 und übertragen den in den entsprechenden Druckräumen 17 bzw. 18 des Servomotors 19 herrschenden Druck in Rückwirkungskammern 29 und 30, die an den der Angriffsseite der Federspange 22 entgegengesetzten Stirnseiten der Ventilkolben 6 bzw. 7 angeordnet sind. Die Rückwirkungskammern 29 und 30 werden in axialer Richtung durch Verschlußdeckel 31 und 32 begrenzt, die von einer federnden Spange 33 in fester Anlage an dem Ventilkörper 1 durch einen Bolzen 34 gehalten werden. Anstelle von Rückwirkungskammern können auch andere Wirkräume, z. B. Dämpfungsräume, von den Verschlußdeckeln begrenzt sein.

Die Spange 33 weist an ihren Enden zwei im wesentlichen ebene Schenkel 35 und 36 auf und ist in ihrem mittleren Bereich durch eine Kröpfung 37 an die Rundung des Bolzens 34 angepaßt. Der Bolzen 34 weist eine Ringnut 38 auf für die Festlegung der Spange 33 in axialer Richtung des Bolzens 34. Zur Montage wird die federnde Spange 33 in eine nutförmige Aussparung 39 des Ventilkörpers 1 eingesetzt, durch ein entsprechendes Werkzeug niedergedrückt und durch den in eine Bohrung 40 des Ventilkörpers 1 eingesetzten Bolzen 34 gehalten und gesichert.

Bezugszeichen

   1 Ventilkörper
   2 Lenkgehäuse
   3 Torsionsstab
   4 Mitnehmerzapfen
   5 Mitnehmerzapfen
   6 Ventilkolben
   7 Ventilkolben
   8 Steuerventil
   9 Steuerventil
  10 Zulaufringnut
  11 Zulaufringnut

12 Zulaufkammer
13 Rücklaufringnut
14 Rücklaufringnut
15 Zylinderringnut
16 Zylinderringnut
17 Druckraum
18 Druckraum
19 Servomotor
20 Quernut
21 Quernut
22 Federspange
23 Berührungslinie
24 Berührungslinie
25 Bolzen
26 Ausdrehung
27 Kanal
28 Kanal
29 Rückwirkungskammer
30 Rückwirkungskammer
31 Verschlußdeckel
32 Verschlußdeckel
33 federnde Spange
34 Bolzen
35 Schenkel
36 Schenkel
37 Kröpfung
38 Ringnut
39 Nut
40 Bohrung

## Patentansprüche

1. Druckmittelsteuereinrichtung für Hilfskraftlenkungen, insbesondere für Kraftfahrzeuge, mit zwei in einem Ventilkörper (1) quer und außermittig zur Längsachse der Druckmittelsteuereinrichtung angeordneten Steuerventilen (8, 9), deren Ventilkolben (6, 7) in dem Ventilkörper (1) axial verschiebbar sind, wobei an den Enden der Steuerventile hydraulische, durch Verschlußdeckel (31, 32) begrenzte Wirkräume angeordnet sind, deren Verschlußdeckel (31, 32) durch eine Halteeinrichtung in Anlage an dem Ventilkörper gehalten sind, dadurch gekennzeichnet, daß die Halteeinrichtung aus einer durch einen in einer parallel zur Längsachse der Druckmittelsteuereinrichtung angeordneten Bohrung (40) des Ventilkörpers (1) festgelegten Bolzen (34) gehaltenen federnden Spange (33) besteht.

2. Druckmittelsteuereinrichtung nach Anspruch 1, dadurch gekennzeichnet, daß die Spange (33) zur Sicherung ihrer Lage eine Kröpfung (37) aufweist, die im wesentlichen an die Rundung des Bolzens (34) angepaßt ist.

3. Druckmittelsteuereinrichtung nach Anspruch 1 oder 2, dadurch gekennzeichnet, daß der Bolzen (34) eine Ringnut (38) zur Aufnahme der Spange (33) aufweist für seine Festlegung in axialer Richtung.

## Claims

1. A pressure medium control unit for servo steering particularly for motor vehicles, having two control valves (8, 9) arranged in a valve body (1), in transverse and eccentric position to the longitudinal axis of the pressure medium control unit, the valve spools (6, 7) of which are axially slideable within valve body (1), with hydraulic reaction chambers restricted by closure covers (31, 32) and arranged at the ends of the control valves (8, 9), of which closure covers (31, 32) are biased against valve body (1) by means of a fixing device, characterized in that the fixing device comprises a spring element (33) held by a pin (34) located in a hole (40) of valve body (1), arranged parallel to the longitudinal axis of pressure medium control unit.

2. A pressure medium control unit according to Claim 1, characterized in that the spring element (33) is provided with an offset shape (37) ensuring its position, and adapted mainly to the round shape of pin (34).

3. A pressure medium control unit according to Claims 1 or 2, characterized in that the pin (34) shows a circular groove (38) to take up spring element (33), for fixing pin (34) in its axial direction.

## Revendications

1. Dispositif de commande de fluide sous pression pour directions assistées, notamment pour véhicules automobiles, comportant deux soupapes de commande (8, 9) disposées dans un corps de soupape (1) dans des positions transversales et décentrées par rapport à l'axe longitudinal du dispositif de commande, les pistons (6, 7) des soupapes étant coulissants axialement dans le corps de soupape (1), ce dispositif comportant des chambres de pression hydraulique disposées au bout des soupapes de commande et délimitées par des couvercles (31, 32) qui sont maintenus en appui contre le corps de soupape par un dispositif de retenue, caractérisé en ce que le dispositif de retenue comprend une agrafe élastique (33) retenue par un goujon (34) fixé dans un alésage (40) ménagé dans le corps de soupape (1) parallèlement à l'axe longitudinal du dispositif de commande.

2. Dispositif de commande selon la revendication 1, caractérisé en ce que l'agrafe (33) comporte, pour assurer sa position, une partie concave (37) qui est sensiblement adaptée à la forme arrondie du goujon (34).

3. Dispositif de commande selon la revendica-tion 1 ou 2, caractérisé en ce que le goujon (34) comporte une rainure annulaire (38) de logement de l'agrafe (33) pour maintenir celle-ci axialement.

FIG. 1

FIG. 2